# NEUE EUROPÄISCHE PATENTSCHRIFT

(11) **EP 0 799 739 B2**
(45) Veröffentlichungstag und Bekanntmachung des Hinweises auf die Entscheidung über den Einspruch: **18.12.2002**
(45) Hinweis auf die Patenterteilung: 28.07.1999
(21) Anmeldenummer: 96105203.2
(22) Anmeldetag: 01.04.1996
(51) Int. Cl.: B60K 15/077

(54) **Kraftstoffbehälter mit Schwallwand für Fahrzeuge**
Fuel tank with baffle wall for vehicles
Réservoir de carburant avec cloison anti-clapot pour véhicules

(43) Veröffentlichungstag der Anmeldung: 08.10.1997
(73) Patentinhaber: SALZBURGER ALUMINIUM AKTIENGESELLSCHAFT, A-5651 Lend (AT)
(72) Erfinder: Bindenberger, Karl, A-5620 Schwarzach i. Pg. (AT); Gerlach, Karl-Heinz, A-5622 Goldegg (AT); Hausbacher, Wilfried, A-5511 Hüttau (AT); Mondl, Josef, A-5651 Lend (AT)
(74) Vertreter: Peege, Klaus

(56) Entgegenhaltungen:
- WO-A-92/03359
- FR-A- 2 638 127
- GB-A- 131 566
- NL-A- 8 004 662

## Beschreibung

Die Erfindung betrifft einen Kraftstoffbehälter mit Schwallwand für Fahrzeuge nach dem Oberbegriff des Anspruches 1.

Unter die Bezeichnung Kraftstoffbehälter für Fahrzeuge sollen solche für Land-, See- und Luftfahrzeuge fallen.

Kraftstoffbehälter (folgend Tanks genannt) für Fahrzeuge der vorstehend genannten Art unterliegen zufolge ihres Inhaltes nicht nur statischen, sondern auch dynamischen Belastungen. Während die statischen Belastungen überwiegend bei stehenden Fahrzeugen auftreten, treten im Fahrbetrieb zu den statischen die dynamischen Tankbelastungen beispielsweise durch Stösse (horizontal und vertikal), ausgelöst durch Beschleunigung, Verzögerung oder Kurvenfahrt der Fahrzeuge bei entsprechend gegenläufigen Bewegungen der Tankinhalte hinzu. An einem Tank für ein Strassenfahrzeug, der eine Umfangswandung und zwei Stirnwandungen umfasst, sei folgend die Ursache der dynamischen Tankbelastung vereinfacht dargestellt. Beschleunigt ein Fahrzeug, so läuft der Tankinhalt auf die in Beschleunigungsrichtung gesehene hintere Stirnwand auf, wohingegen der Tankinhalt in gleicher Richtung gesehen gegen die vordere Stirnwand aufläuft, wenn das Fahrzeug verzögert wird. Bei der Kurvenfahrt ergeben sich gleiche, zur Kurvenrichtung gegenläufige Bewegungen des Tankinhaltes, die sich beispielsweise bei einer das Fahrzeug beschleunigenden Kurvenfahrt zu einer aus beiden Richtungen der Einzelbewegungen resultierenden Bewegungsrichtung herausbilden. So kann beispielsweise bei beschleunigter Kurvenfahrt der Tankinhalt überwiegend auf einen Teil der hinteren Stirnwand und angrenzender Umfangswandung auflaufen. Die Kraft, mit der der Inhalt auf die Tankwandungen aufläuft und der Druck, den er zeitweilig auf diese Tankwandungen ausübt, ist abhängig vom Grad der Beschleunigung bzw. Verzögerung sowie der Menge des Tankinhaltes. Stösse in vertikaler Richtung lösen die von allen Kräften grössten, auf die Tankwandung wirkenden Kräfte aus, da sich in diesem Belastungsfall Beschleunigungskräfte in Druck (Flüssigkeitsdruck) umsetzen.

Schwallwände, die als solche in Tanks eingebaut bekannt sind, haben die Aufgabe, den Versatz des Tankinhaltes in Menge und Geschwindigkeit nach Art eines Wellenbrechers zu verzögern, um so die dynamische Belastung eines Tanks bzw. seiner Wandungen zu vermindern. Schwallwände sind, vereinfacht dargestellt, Lochplatten, die in einem Tank quer zur Hauptbewegungsrichtung des Tankinhaltes eingebaut sind und vom Tankinhalt je nach Geschwindigkeitsänderung des Fahrzeuges entweder nach vorn oder nach hinten, d.h. vor oder rückwärts durchströmt werden. Dabei nehmen Schwallwände einen grossen Teil der Belastungen auf, die sonst - d.h. ohne Einbau von Schwallwänden - die Tankwandungen aufzunehmen hätten. Im übrigen stabilisieren sie den Querschnitt des Tanks und damit auch dessen Befestigung an einer Halterung durch Spannbänder.

Bekannt ist, Schwallwände in Tanks einzubauen, indem der gesamte äussere Umfang der Schwallwand mit dem inneren Umfang der Tankumfangswandung verbunden wird, wobei die Verbindung dadurch erfolgt, dass äusserer (der Schwallwand) und innerer (des Tanks) Umfang miteinander verschweisst werden. Bekannt ist aus der FR-A-2.638.127 ein Kraftstoffbehälter mit zwei Stirn- und einer Umfangswandung und mindestens einer im Kraftstoffbehälter aufgenommenen Schwallwand, die mit der Umfangswandung verbunden ist, wobei die Schwallwand als ein Schwallwandeinsatz, umfassend eine Stirnfläche mit von der Sitrnfläche im wesentlichen rechtwinklig abstehender, den äusseren Umfang der Stirnfläche umlaufender Schulter ausgebildet ist und die Schulter mit der Umfangswandung vermittels Druckfügestellen umfassend jeweils eine Eindrückung am inneren Umfang der Umfangswandung und eine Eindrückung am äusseren Umfang der Schulter formschlüssig verbunden ist.

Auf dem Gebiet der Kraftfahrzeugtechnik sind Tanks mit sogenannten Quetschschutzwänden bekannt, die im Kollisionsfall einen Beitrag zur Verhinderung bzw. Erschwerung eines Aufbrechens des Tanks leisten. Quetschschutzwände sind praktisch jeweils eine Duplizierung je einer Tankstirnwand, die innerhalb eines Tanks beabstandet vor einer Tankstirnwand eingebaut sind. Bekannt ist, Quetschschutzwände, die nicht wie Schwallwände mit Löchern für den Durchtritt des Tankinhaltes in zwei Richtungen ausgebildet sind, und wie gesagt eine andere Aufgabe als letzte erfüllen, in einen Tank gleich wie eine Schwallwand, d.h. umfangsumgreifend einzubauen, jedoch erfolgt die Verbindung nicht durch Schweissen sondern durch plastische Kaltverformung eines Streifens der Tankumfangswandung mit einem umlaufenden Rand der Quetschschutzwand, wobei die Kaltverformung durch Rollen erfolgt.

Die bekannten Arten der Befestigung der Schwallwand und Quetschschutzwand in einem Tank sind vergleichbar mit einer aus der Lehre der Statik bekannten allseits eingespannten Platte. Allseits eingespannte Platten sind bezüglich Auflagerbelastungen - Auflagerbelastungen sind bezüglich Tanks vergleichbar mit Einleitung von auf Schwallwände oder Quetschschutzwänden wirkende Kräfte auf die Tankumfangswandungen - statisch unbestimmt, d.h. auf Tanks mit genannten Einbauten übertragen lassen sich Brüche der Verbindung von Einbauten mit Tanks oder Brüche in Folge von Materialversagen der Tankumfangswandung bei ansonsten intakter Verbindung weder zeitlich noch örtlich durch Berechnung oder empirisch voraussagen. Hinzutreten gewisse Nachteile, die aus der konstruktiven Gestaltung der umlaufend formschlüssigen Verbindung (FR-A-2.638.127) resultieren. Die bekannte Verbindung umfasst eine Doppelsicke, wobei eine der Abstützung der Schwallwand im Tank und die andere der formschlüssigen Verbindung von Schwallwand und Tankumfangswand dient. Bei Fertigung der Doppelsicke stellt sich zwischen den Sicken eine Abnahme der Stärke der Tankumfangswandung ein, was im Bereich der Sicken zu Festigkeitsverlusten mit verstärkter Neigung zu Rissbildungen führt. Dies ist für Tanks für brennbare und/oder kontaminierende Füllgüter, also inbesondere für Tanks für Fahrzeuge unbefriedigend. Um hiergegen Abhilfe zu schaffen, wurden Tanks bezüglich ihrer Materialien und Materialdimensionierungen mit nur unbefriedigendem Erfolg verstärkt. Für Kraftfahrzeugtanks nachteilig ergaben sich durch diese Massnahme höhere Tankgewichte. Ein Kraftstoffbehälter mit den Merkmalen des Oberbegriffs des Anspruches ist aus einer offenkundigen Vorbenutzung bekannt.

Aufgabe der vorliegenden Erfindung ist die Schaffung eines Tanks mit mindestens einer Schwallwand, mit dem die vorstehend umrissenen Nachteile vermieden sind, und diese Aufgabe wird vermittels der kennzeichnenden Merkmale des Patentanspruchs 1 gelöst.

Vorteilhafte Ausgestaltungen des Tankes nach Patentanspruch 1 kennzeichnen die dem Patentanspruch 1 folgenden Ansprüche.

Weitere Vorteile, Merkmale und Einzelheiten der Erfindung ergeben sich aus der folgenden Beschreibung eines bevorzugten Ausführungsbeispieles und der Zeichnung. Es zeigen:
- Fig. 1:: einen Tank in der Seitenansicht;
- Fig. 2:: den Tank gemäss Fig. in der Vorderansicht;
- Fig. 3:: die Verbindung einer Schwallwand mit der Umfangswandung des Tankes gemäss den Fig. 1 und 2.

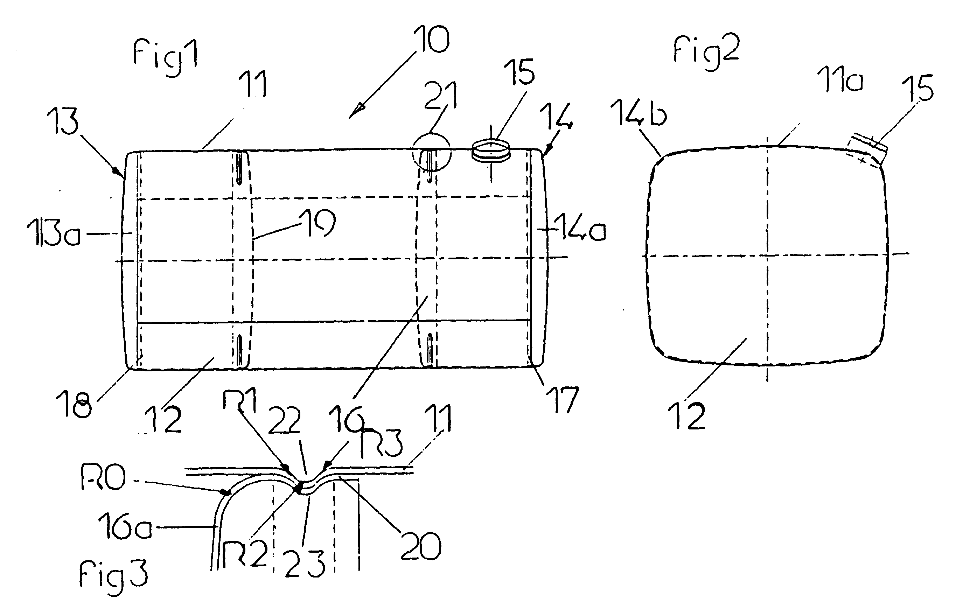

In Fig. 1 ist mit 10 ein gemäss der Erfindung ausgebildeter Behälter, im vorliegenden Falle Kraftstoffbehälter für Kraftfahrzeuge, d.h. Tanks, bezeichnet. Die Erfindung ist nicht auf Tanks der vorstehend beschriebenen Art beschränkt, vielmehr ist sie für Behältnisse zum Transport von Flüssigkeiten für Land, Wasser- und Luftfahrzeuge geeignet, so beispielsweise für die Zisterne (Flüssigkeitstransportgutbehälter) eines strassengebundenen Transportfahrzeuges. Beschrieben wird die Erfindung im Zusammenhang mit einem sogenannten Kastentank, d.h. einem im Querschnitt mehreckigen Tank (Fig. 2), dessen Querschnittsfläche quadratisch, rechteckig oder polygon sein kann. Die Querschnittsfläche kann aber auch rund sein. Bei obigen Querschnittsgeometrien können sowohl die Ecken gerundet wie die Seiten gekrümmt sein.

Tanks der beschriebenen Querschnittsbemessung umfassen einen rohrförmigen Teil 12, gebildet aus einer Umfangswandung 11, wobei der rohrförmige Teil 12 beidseits mit einer Stirnwandung 13, 14 verschlossen ist, die zumeist mit der Umfangswandung 11 umlaufend verschweisst sind.

Mit 15 ist ein Tankeinlass (Einfüllstutzen) zur Tankbefüllung bezeichnet. Der Tank 10 weist auch mindestens einen Auslass (nicht dargestellt) auf.

Als Beitrag zur Lösung der erfindungsgemässen Aufgabe ist der in den Figuren gezeigte Tank, d.h. die Umfangswandung 11, die Stirnwände 13, 14 und der Schwallwandeinsatz 16 aus Aluminium ausgebildet. Folgende Legierungsgruppen haben sich als besonders vorteilhaft erwiesen, und zwar die der Gruppe ALMg... und die der Gruppe ACMgSi.... Verwendet werden können aber auch andere Aluminiumlegierungen.

Die Stärke der Umfangswandung 11 und der Stirnwände 13, 14 ist abhängig vom Tankvolumen und spezifischen Gewicht des im Tank aufgenommenen Transportgutes vermehrt um rechnerische Zuschlagsgrössen zur Berücksichtigung von Sicherheitsfaktoren. Bei gewöhnlichen Treibstofftanks für Kraftfahrzeuge, mit Tanks von 50 bis 990 Liter Aufnahmevermögen finden sich erfindungsgemäss Wandungsstärken von 1,0 mm bis 5,0 mm, vorzugweise 1,5 mm bis 2,5 mm.

Wie Fig. 2 zeigt, ist jede Seite 11a der Umfangswandung 11 des Behälters 10, also jede Seite 11a der Umfangswandung 11 eines mehreckigen Behälters 10 und jede Stirnwandung 13, 14 aus Festigkeitsgründen gekrümmt ausgebildet.

Die Radien der Krümmung der Seiten 11a liegen zweckmässigerweise zwischen 1500 mm und 5000 mm, vorzugsweise zwischen 1700 mm und 2000 mm. Die Stirnwandungen 13, 14 sind unter Anwendung gleicher Radien schüsselartig vertieft, wobei sich an Schüsseln 13a, 14a Flansche 17, 18 anschliessen, die mit der Umfangswandung 11 bzw. den Seiten 11a verbunden, vorzugsweise verschweisst sind. Die Seiten 11a sind über gebogene Teile 14b (Radiusabschnitte) miteinander verbunden. Die Radien betragen bei Tanks der hier angegebenen Art und Grösse 50 mm bis 200 mm und liegen vorzugsweise in einem Bereich von 90 mm bis 120 mm. Die Radiusangaben der Pombierung und der gebogenen Teile 11b sind Radien gemessen an der Innenseite des Tanks 10, wobei diese Masse auf die äussere Umfangsbemessung des Schwallwandeinsatzes 16 je nach Wahl dieser Masse zu übertragen sind, dabei kann die Pombierung der Stirnfläche 16a des Schwallwandeinsatzes 16 mit der der Stirnwandungen 13, 14 übereinstimmen.

Gemäss Fig. 1 besteht der Schwallwandeinsatz 16 aus der eigentlichen Schwallwand, d.h. der Stirnfläche 16a, die mit Durchtrittsöffnungen 19 für den Durchtritt eines flüssigen Tankinhaltes durch die Stirnfläche 16a versehen ist. Bei Tanks für Inhalte von 50 bis 990 Litern beträgt die Anzahl der Löcher normalerweise 2 bis 20, vorzugsweise 8 bis 16. Vorteilhafte Durchmesser der Durchtrittsöffnungen 19 liegen erfindungsgemäss in der Grössenordnung von 50 mm bis 150 mm, vorzugsweise 70 mm bis 100 mm. Die Stirnfläche 16a, im übrigen kann sie aus gleichem Werkstoff und gleicher Materialstärke wie die Tankwandungen sein, ist nach der Erfindung vorzugsweise konkav ausgebildet und Stirnflächen 16a bilden die Erfindung sehr zweckmässig fort, wenn ihr Radius, d.h der Radius ihrer Krümmung im Bereich von 1500 mm bis 12000 mm, vorzugsweise zwischen 1800 mm und 2400 mm liegt. Neben der konkaven Ausbildung kann auch eine konvexe, gerade oder wellblechartige vorgesehen sein. An die Stirnfläche 16a schliesst sich eine Schulter 20 an, die den äusseren Umfang der Stirnfläche 16a umläuft und zur Stirnfläche 16a im wesentlichen senkrecht steht. Stirnfläche 16a und Schulter 20 in axialer Richtung des so gebildeten Schwallwandeinsatzes gemessen, bestimmten die sogenannte Schwallwandhöhe, die erfindungsgemäss im Bereich von 30 mm bis 150 mm, vorzugsweise im Bereich von 50 mm bis 80 mm liegt.

Fig. 3 zeigt vergrössert und als Einzelheit die in Fig. 1 dargestellte erfindungsgemäss ausgebildete Druckfügestelle. Fig. 3 zeigt, dass die Schulter 20 über einen Radius Ro in die Stirnfläche 16a übergeht. Als für die Erfindung zweckmässig hat sich für den Radius Ro eine Bemessung zwischen 10 mm bis 30 mm vorzugsweise zwischen 12 mm bis 18 mm ergeben. Die Schulter 20 liegt mit ihrem gesamten äusseren Umfang an der inneren Umfangsfläche des rohrförmigen Teiles 12-ausgenommen das Teilstück umfassend den Radius Ro - an. Dabei ist dieser Eingriff der Umfangsflächen toleranzmässig so bemessen, dass ein Schwallwandeinsatz 16 von einer offenen Stirnseite aus in den rohrförmigen Teil 12 bis zu der Stelle im rohrförmigen Teil 12 eingeschoben werden kann (Schiebesitz-toleranzen), an der der Schwallwandeinsatz 16 mit dem rohrförmigen Teil 12 verbunden wird. Die Schwallwand bei Einbau erfüllt auch die Aufgabe der Formgebung des Tankmantels, d.h. des rohrförmigen Teiles durch Stabilisierung und Kalibrierung.

Die Verbindung erfolgt gemäss der Erfindung formschlüssig durch Ausbildung mindestens zweier über den Umfang der Schulter 20 und inneren Umfang des rohrförmigen Teiles 12 im wesentlichen gleichmässig beabstandeter Druckfügestellen (Sicken), bestehend aus einer Eindrückung 22 im rohrförmigen Teil 12 und einer Eindrückung 23 in der Schulter 20, die ineinanderliegend ausgebildet Schulter 20 und rohrförmigen Teil 12 miteinander verbinden. Diese nicht um den gesamten Umfang umlaufende sondern erfindungsgemäss nur sektorielle oder bezüglich der gesamten Verbindungsstrecke gesehen partielle Verbindung des Schwallwandeinsatzes 16 mit dem rohrförmigen Teil 12 gewährleistet das Ergebnis, oder die Lösung, die mit der erfindungsgemässen Aufgabenstellung angestrebt wird. Dabei hat sich überraschenderweise gezeigt, dass offenbar ein Grossteil der von der Stirnfläche 16a des Schwallwandeinsatzes 16 ausgehende dynamische Lastwechsel-Kraft ausgehend von dem oszillierenden Tankinhaltsversatz bereits durch den Radius Ro stark abgebaut werden, so dass nur noch ein kleiner Teil der Kräfte durch die Druckfügeverbindung durch vektorielle Zerlegung der Restkräfte deren Abbau und Resteinleitung der Teilkräfte in die Umfangswandung 11 des rohrförmigen Teiles aufzunehmen ist. Mit diesen Massnahmen ist das Stand- oder Standzeitverhalten mit Schwallwandeinsätzen ausgestatteter Tanks weitgehend berechenbar geworden, so dass ihre Fertigungsgewichte reduziert werden und auch Leichmetallwerkstoffe, wie vorstehend definiert, zum Einsatz kommen können.

Erfindungsgemäss vorzusehen sind mindestens zwei in Weiterbildung der Erfindung vier Druckfügestellen 21 gleichmässig beabstandet voneinander am Umfang verteilt vorzusehen. Bei einem runden Tank können die Druckfügestellen wie vorstehend beschrieben über den Umfang verlaufend in beliebigen Abständen angeordnet sein. Bei mehreckigen Behältern hat es sich als vorteilhaft erwiesen, die Druckfügestellen 21 in den Ecken, d.h. in den Radiusabschnitten 11b, die Behälterwandungsteile verbinden, vorzusehen, sie können aber auch an jeder Stelle zwischen zwei aufeinanderfolgenden Radiusabschnitten entlang, d.h. an einem Behälterwandungsteil, vorzugsweise einander diagonal gegenüberliegend, vorgesehen sein.

Die eigentliche Druckfügestelle 21 oder Sicke 21 schliesst sich vorzugsweise an den Auslauf des Radiusses Ro an die Schulter 20 an. Geometrisch definiert werden Druckfügestellen 21 durch drei ineinanderlaufende Radien R₁, R₂ und R₃ (Kreisbogenteile), wobei R₂ der Bodenradius und R₁ und R₃ die Uebergangsradien vom Bodenradius R₂ zur Umfangswandung 11 des rohrförmigen Teiles 12 und zum Radiusabschnitt zwischen Stirnfläche 16a und Schulter 20 sind. Die Eindrückungen 22 und 23 werden durch ein Presswerkzeug (nicht gezeigt) bestehend aus Pressstempel und Matrize gebildet, wobei die Matrize am inneren Umfang der Schulter 20 anliegt und der Pressstempel auf den äusseren Umfang des rohrförmigen Teiles 12 einwirkt und das Material der Umfangswandung 11 und der Schulter 20 übereinanderliegend in die Matrize unter Bildung der Sicke schiebt. Die folgend angegebenen bevorzugten Radienbemessungen für die Radien R₁, R₂ und R₃ (wobei R₁ und R₃ in ihrer Abmessung gleich sind), sind die am Pressstempel vorgesehenen Radien, die sich nach Verpressung genau auf der Umfangswandung 11 des rohrförmigen Teiles 12 abbilden, wobei sich die Grösse bzw. die Bemessung der zu R₁, R₂, R₃ korrespondierenden Radien in der Matrize nach den Dicken der dazwischenliegenden Materialschichten (Umfangswandung 11, Schulter 20) bestimmt. So bestimmen beispielsweise R₁ mit dem wandungsstärke-modifizierten korrespondierenden Radius die erfindungsgemäss bevorzugten Radiusbemessungen.

Als vorteilhaft für die Umsetzung der Erfindung haben sich Radien R₁ und R₃ in der Grössenordnung von 3 mm bis 20 mm, vorzugsweise 4 mm bis 8 mm erwiesen, und R₂ liegt bevorzugt in der Grössenordnung von 3 mm bis 20 mm, vorzugsweise 4 mm bis 6 mm. Vorzugsweise bilden die aufeinanderfolgenden, gekrümmt verlaufenden Strecken eine aus drei Segmenten (durch die Radien R₁, R₂, R₃) gebildete Wellenlinie, wobei die Länge jeden Segmentes mindestens einem durch einen jeweiligen Radius bestimmten Viertelkreis entspricht.

Durch Aufsummieren der Radien R₁, R₂, R₃ bestimmt sich in Achsialrichtung des Tanks gesehen die Breite der Druckfügestelle (Sicke). Vorzugsweise liegt die Breite in einem Bereich von 7 mm bis 50 mm, vorzugsweise in einem von 10 mm bis 20 mm. Die Länge einer Druckfügestelle gemessen quer (90°) zur Achsialrichtung beträgt das 1,5- bis 5-fache, vorzugsweise 2-4-fache der Breite einer Druckfügestelle.

### Beispiel:

Der Radius R₁, R₂ und R₃ betragen je 5 mm. Das Fügewerkzeug bildet drei aufeinanderfolgende Viertelkreise ab. Daraus ergibt sich die Breite der Druckfügestelle von 11.77 mm. Deren Länge soll das 4-fache der Breite betragen, diese beträgt somit 47.1 mm.

## Patentansprüche

1. Kraftstoffbehälter (10) mit zwei Stirnwandungen (13, 14) und einer Umfangswandung (11) und mindestens einer im Kraftstoffbehälter aufgenommener Schwallwand, die als Schwallwandeinsatz (16) ausgebildet ist, der eine Stirnfläche (16a) mit von der Stirnfläche (16a) im wesentlichen rechtwinklig abstehender, über einen Radiusabschnitt (RO) mit der Stirnfläche (16) verbundene, den äusseren Umfang der Stirnfläche (16a) umlaufende Schulter (20) umfasst, wobei die Schulter (20) mit der Umfangswandung (11) vermittels mindestens zwei über den Umfang der Schulter (20) und den inneren Umfang der Umfangswandung (11) beabstandet zueinander angeordneten Druckfügestellen umfassend jeweils eine aus drei Kreisbogenteilen (R₁, R₂, R₃) aufeinandes in Axialrichtung des Kraftstoffbehalters folgend gebildete Eindrückungen (22, 23) am inneren Umfang der Umfangswandung (11) und eine Eindrückung (23) am äusseren Umfang der Schulter (20) formschlüssig verbinden ist
**dadurch gekennzeichnet, dass**
a) die Stirnwandung (13, 14) die Umfangswandung (11) und der Schwallwand einsatz (16) aus Aluminium bestehen und sich
b) die Eindrückungen (22, 23) in der Schulter (20) mit einem Kreisbogenteil an den Radiusabschnitt (RO) auschliessen.

2. Kraftstoffbehälter nach Anspruch 1, **dadurch gekennzeichnet, dass** die Druckfügestellen jeweils aus einer in die Umfangswandung (11) des Kraftstoffbehälters (10) eingebrachten Eindrückung (22) und einer in die Schulter (20) eingebrachten Eindrückung (23), die formschlüssig ineinandergreifen, gebildet sind.

## Claims

1. Fuel container (10) comprising two end walls (13, 14) and a circumference wall (11) at least one splash wall arranged inside the fuel container (10) whereby the splash wall is formed as a splash wall insert (16) comprising an end wall (16a) and a shoulder (20) connected with the end wall (16a) by means of a radius section RO extending around the outer circumference of the end wall (16a) and extending rectangularly therefrom and whereby the shoulder (20) is connected with circumference wall (11) by means of two pressure joint spots (21) arranged at a distance to each other along the circumference of the shoulder (20) and along the inner circumference of the circumference wall (11), said pressure joint spots (21) each comprising impressions (22, 23) formed of three arc of a circle parts (R₁, R₂, R₃) following each other in axial direction of the fuel container (10), said impressions (22, 23) engaging via an impression (22) on the inner circumference of the circumference wall (11) and an impression (23) on the outer circumference of the shoulder (20),
**characterized** thereby that the end walls (13, 14), the circumference wall (11) and the splash wall insert (16) consist of aluminium and that the impressions (22, 23) in the shoulder (20) link up with an arc of a circle part with the radius section (RO).

2. Fuel container according to claim 1, **characterized** thereby that the pressure joint spots (21) consist of an impression (22) arranged on the circumference wall (11) of the fuel container (10) and an impression (23) arranged on the shoulder (20), said impressions positively interlocking.

## Revendications

1. Réservoir d'essence (10) comprenant deux parois frontales (13, 14) et une paroi périphérique (11) et au moins un brise-flot à l'intérieur du réservoir d'essence, le brise-flot étant configuré comme un insert de brise-flot (16), comprenant une face frontale (16a) avec un épaulement (20) saillant de la face frontale sensiblement à angle droit et épousant la circonférence extérieure de la face frontale (16a) et relié à l'épaulement (20) par intermédiaire d'une section de rayon (RO), l'épaulement (20) étant relié à la paroi périphérique (11) à l'aide d'au moins deux points d'emboîtement par pression disposés à distance l'un de l'autre sur la circonférence de l'épaulement (20) et la circonférence intérieure de la paroi périphérique, les points d'emboîtement par pression comprenant des empreintes (22, 23) formées, dans le sens axial du réservoir (10), par trois éléments d'arc de cercle (R₁, R₂, R₃) successifs,
**caractérisé en ce que** les parois frontales (13, 14), la parois périphérique (11) et l'insert de brise-flot (16) sont faites en aluminium et **en ce que** les empreintes (22, 23) de l'épaulement (20) sont connectées avec un élément d'arc de cercle à la section de rayon (RO).

2. Réservoir d'essence selon la revendication 1, **caractérisé en ce que** les points d'emboîtement par pression comprennent respectivement une empreinte (22) prévue dans la paroi périphérique (11) du réservoir d'essence (10), et une empreinte (23) prévue dans l'épaulement (20), qui s'emboîtent l'un dans l'autre mécaniquement.
